# EUROPEAN PATENT SPECIFICATION

(11) **EP 2 634 220 B1**
(45) Date of publication and mention of the grant of the patent: **03.05.2017**
(21) Application number: 11836435.5
(22) Date of filing: 28.10.2011
(51) Int. Cl.: C08L 79/08, C08G 73/10, C08J 5/18, C08K 3/04

(54) **PROCESS FOR PRODUCTION OF ELECTRICALLY CONDUCTIVE POLYIMIDE FILM**
VERFAHREN ZUR HERSTELLUNG EINES ELEKTRISCH LEITENDEN POLYIMIDFILMS
PROCÉDÉ DE PRODUCTION DE FILM DE POLYIMIDE ÉLECTRIQUEMENT CONDUCTEUR

(30) Priority: 10.05.2011 JP 2011105627; 28.10.2010 JP 2010242236
(43) Date of publication of application: 04.09.2013
(73) Proprietor: Kaneka Corporation, Osaka-shi, Osaka 530-8288 (JP)
(72) Inventor: OKU Satoshi, Settsu-shi Osaka 566-0072 (JP); YANAGIDA Masami, Settsu-shi Osaka 566-0072 (JP); KATO Yusuke, Settsu-shi Osaka 566-0072 (JP); KOJIMA Masahiro, Settsu-shi Osaka 566-0072 (JP); ITO Takashi, Settsu-shi Osaka 566-0072 (JP)
(74) Representative: Vossius & Partner Patentanwälte Rechtsanwälte mbB
(86) International application number: PCT/JP2011/074903
(87) International publication number: WO 2012/057302

(56) References cited:
- EP-A1- 1 424 352
- WO-A1-2009/113585
- JP-A- 8 143 665
- JP-A- H10 502 869
- JP-A- 2000 231 270
- JP-A- 2000 319 392
- JP-A- 2004 131 659
- US-A1- 2004 081 808
- US-A1- 2004 151 928
- US-A1- 2010 078 596

## Description

### Technical Field

The present invention relates to a process for production of an electrically conductive polyimide film.

### Background Art

Polyimide films have high mechanical properties, heat resistance, chemical resistance, and other properties, and thus are put into practical use in a wide variety of fields from the aerospace field to the electronic material field. An electrically conductive polyimide film obtained by imparting electric conductivity to the polyimide film is useful as alternative materials to metallic electronic materials and is suitably used especially for electrode materials in batteries, electromagnetic shielding materials, electrostatic adsorption films, antistatic materials, members in image forming apparatuses, electronic devices, and other applications. In order to adapt the electrically conductive polyimide film to such an application over a long period of time, the film is required to have at least excellent electric characteristics and excellent mechanical properties.

An electrically conductive polyimide film is produced by the processes below:
(1) a process of casting a polyamic acid solution dispersing a conductivity-imparting agent on a support to form a coating film; and
(2) a process of volatilizing and removing a solvent contained in the coating film and of imidization.

Conventionally, carbon black (conductivity-imparting agent) is dispersed in a polar organic solvent, then a tetracarboxylic dianhydride and a diamine compound are added and polymerized to afford a polyamic acid solution, next the solution is imidized, and consequently an electrically conductive polyimide film is produced. However, the method has a problem of readily causing aggregation of carbon black, for example, during polymerization because the carbon black has low dispersivity in a polar organic solvent.

In order to suppress the aggregation of carbon black, various techniques have been developed. Patent Document 1 discloses a method of controlling the viscosity of a polyamic acid solution during polymerization in the process (1) by stirring the solution at a rotation speed of 20 rpm or less while heating. Patent Document 2 discloses a method of using a surfactant as the dispersant for dispersing carbon black in a polar organic solvent. Patent Document 3 discloses a method of using a diluted polyamic acid solution as the solvent for dispersing carbon black and using a surfactant as the dispersant for dispersing carbon black in the diluted polyamic acid solution. Patent Document 4 discloses a method of using polyvinylpyrrolidone as the dispersant for dispersing carbon black in a polar organic solvent.

However, in the method of Patent Document 1, carbon black is not sufficiently dispersed. Meanwhile, in the methods of Patent Documents 2 to 4, the finally obtained electrically conductive polyimide film may contain a residue of the dispersant such as a surfactant and polyvinylpyrrolidone. Due to these drawbacks, the electrically conductive polyimide film obtained by such a method may cause problems, for example, deterioration of electric characteristics, increase in environmental dependence of an electric resistance value, and reduction in mechanical properties.

Patent Document 5 discloses a method of using an amide compound having a low molecular weight as the dispersant for dispersing carbon black in a polar organic solvent. Patent Document 6 discloses a method of preparing a plurality of polyamic acid solutions having different carbon black contents and mixing these polyamic acid solutions. In these methods, it is believed that increase in the coating ratio of a polyamic acid on each surface of carbon black particles makes the interface the polyamic acid and carbon black an optimum condition, thereby affording good dispersion state of the carbon black. As a result, it is considered that an electrically conductive polyimide film having good electric characteristics and good mechanical properties can be produced.

As described above, conventional techniques for producing an electrically conductive polyimide film having electrical and mechanical stability have been developed by improving the dispersion state of carbon black in a polyamic acid.

These methods are specifically disclosed to be effective in a thermal imidization method in which vaporization of a solvent contained in a coating film and imidization reaction are carried out substantially by heat alone. However, the thermal imidization method requires a very long period of time for carrying out the process of volatilizing and removing a solvent and of imidization in the production of a polyimide film, and thus is likely to be inferior in productivity. The low productivity directly leads to increase in total cost, resulting in economic problem.

Meanwhile, there is known a chemical imidization method using an imidization accelerator containing a catalyst and a chemical dehydrating agent. The chemical imidization method has an advantage of dramatically high productivity as compared with the thermal imidization method, but unlike the thermal imidization method, by the chemical imidization method, the resistance value of a finally obtained electrically conductive polyimide film is difficult to be controlled in a desired range. In addition, techniques effective for the thermal imidization method by which imidization is carried out with substantially heat alone are not necessarily equally effective for the chemical imidization method using an imidization accelerator. Patent Documents 1 to 6 disclose no condition or others for the chemical imidization method for achieving good dispersivity of a conductivity-imparting agent and for achieving low electric resistivity of an electrically conductive polyimide film to an equal degree to those by the thermal imidization method. Document US 2010/078596 also discloses a polyamic acid composition containing conductive imparting agent.

### Citation List

### Patent Literatures

Patent Document 1: JP-A No. 2003-277502
Patent Document 2: JP-A No. 2007-146042
Patent Document 3: JP-A No. 2007-041214
Patent Document 4: JP-A No. 2009-091500
Patent Document 5: JP-A No. 2007-302769
Patent Document 6: JP-A No. 2008-280479

### Summary of Invention

### Technical Problem

The present inventors have studied to obtain an electrically conductive polyimide film having high electric conductivity by a chemical imidization method. As a result, it has been revealed that, by the chemical imidization, method, a conductivity-imparting agent is reaggregated in the process (2), that is, for example, during drying of a coating film (during volatilizing and removing of a solvent contained in a coating film) and during imidization, and the electric resistivity of an electrically conductive polyimide film to be obtained is difficult to be controlled in a desired range by the reaggregated conductivity-imparting agent.

An object of the present invention is to provide a process capable of production of an electrically conductive polyimide film having a desired electric resistivity with good productivity.

### Solution to Problem

As a result of repeated intensive studies based on the findings in order to solve the problems, the present inventors have found a process in which an electrically conductive polyimide film is produced by a chemical imidization method and by using a tetracarboxylic dianhydride containing 3, 3', 4, 4'-biphenyltetracarboxylic dianhydride and a diamine compound containing 4,4'-oxydianiline. The present inventors have found that the process can suppress the reaggregation of a conductivity-imparting agent, can control an electric resistivity to a desired value to an almost equal degree to that by the thermal imidization method, and can shorten the time required for imidization, thereby enabling the production of an electrically conductive polyimide film with good productivity, and the present invention has been accomplished.

That is, the present invention relates to a process for production of an electrically conductive polyimide film containing a conductivity-imparting agent and a polyimide resin, the process including drying and imidizing a coating film including a polyamic acid (A) obtained by reacting a tetracarboxylic dianhydride containing 3,3',4,4'-biphenyltetracarboxylic dianhydride and a diamine compound containing 4,4'-oxydianiline, wherein the tetracarboxylic dianhydride further contains 3,3',4,4'-benzophenonetetracarboxylic dianhydride and/or the diamine compound further contains p-phenylenediamine, a conductivity-imparting agent (B), and an imidization accelerator (C).

In the production process of the present invention, it is preferable that 3,3',4,4'-biphenyltetracarboxylic dianhydride be contained in an amount of 50 to 100% by mol based on the total amount of the tetracarboxylic dianhydride and/or 4,4'-oxydianiline be contained in an amount of 50 to 100% by mol based on the total amount of the diamine compound.

In the production process of the present invention, it is preferable that 3,3',4,4'-biphenyltetracarboxylic dianhydride be contained in an amount of 10 to 100% by mol based on the total amount of the tetracarboxylic dianhydride, 3,3',4,4'-benzophenonetetracarboxylic dianhydride be contained in an amount of 0 to 90% by mol based on the total amount of the tetracarboxylic dianhydride, 4,4'-oxydianiline be contained in an amount of 50 to 100% by mol based on the total amount of the diamine compound, and p-phenylenediamine be contained in an amount of 0 to 50% by mol based on the total amount of the diamine compound.

In the production process of the present invention, it is preferable that the conductivity-imparting agent (B) contain carbon conductive particles.

In the production process of the present invention, it is preferable that the conductivity-imparting agent (B) be contained in an amount of 1 to 50 parts by weight with respect to 100 parts by weight of the polyamic acid (A).

In the production process of the present invention, it is preferable that the imidization accelerator (C) contain a catalyst and a chemical dehydrating agent.

In the production process of the present invention, it is preferable that the catalyst be used in an amount ranging from 0.1 to 4.0 molar equivalents with respect to 1 mol of amic acid in the polyamic acid (A).

In the production process of the present invention, it is preferable that the chemical dehydrating agent be used in an amount ranging from 1.0 to 5.0 molar equivalents with respect to 1 mol of amic acid in the polyamic acid (A).

In the production process of the present invention, it is preferable that the electrically conductive polyimide film have a thickness ranging from 1 to 100 µm.

In the production process of the present invention, it is preferable that the electrically conductive polyimide film have a volume resistivity in a thickness direction ranging from 1.0 × 10⁻¹ to 1.0 × 10² Ωcm and/or have a surface resistivity ranging from 1.0 × 10¹ to 1.0 × 10⁴ Ω/□.

### Advantageous Effects of Invention

By the production process of the present invention, the electric resistivity of an electrically conductive polyimide film to be obtained can be controlled in a desired range, as with a thermal imidization method. The production process of the present invention can perform drying and heating (imidization) of a coating film containing a particular polyamic acid (A), a conductivity-imparting agent (B), and an imidization accelerator (C) in a short period of time. Hence, the process can achieve the downsizing of an apparatus and the increase in operating speed, resulting in excellent productivity.

### Description of Embodiments

An embodiment of the present invention will be described as below, but the present invention is not limited to this.

The production process of the present invention is characterized by drying and imidizing a coating film including a polyamic acid (A), a conductivity-imparting agent (B), and an imidization accelerator (C). The coating film is formed by, for example, using, as a coating liquid, a solution or a dispersion liquid dissolving and/or dispersing each of the components (A) to (C) in an organic solvent and applying the coating liquid onto a support.

The polyamic acid (A) is obtained by reacting a particular tetracarboxylic dianhydride and a particular diamine compound. The particular tetracarboxylic dianhydride contains 3,3',4,4'-biphenyltetracarboxylic dianhydride and may contain a tetracarboxylic dianhydride except 3,3',4,4'-biphenyltetracarboxylic dianhydride. The tetracarboxylic dianhydride further contains 3,3',4,4'-benzophenonetetracarboxylic dianhydride and/or the diamine compound further contains p-phenylenediamine. The particular diamine compound contains 4,4'-oxydianiline and may contain a diamine compound except 4,4'-oxydianiline. By using such a polyamic acid (A), even by the chemical imidization method, the electric resistivity of an electrically conductive polyimide film to be obtained can be controlled in a desired range. The electrically conductive polyimide film to be obtained has excellent electric characteristics and excellent mechanical properties. In addition, the electrically conductive polyimide film to be obtained achieves almost equal quality to that of an electrically conductive polyimide film produced by the thermal imidization method, and the electrically conductive polyimide film can be produced with higher productivity than that by the thermal imidization method.

Examples of the tetracarboxylic dianhydride except 3,3',4,4'-biphenyltetracarboxylic dianhydride include pyromellitic dianhydride, 2,3,6,7-naphthalenetetracarboxylic dianhydride, 1,2,5,6-naphthalenetetracarboxylic dianhydride, 2,3,3',4'-biphenyltetracarboxylic dianhydride, 2,2',3,3'-biphenyltetracarboxylic dianhydride, 3,3',4,4'-benzophenonetetracarboxylic dianhydride, 4,4'-oxyphthalic dianhydride, 2,2-bis(3,4-dicarboxyphenyl)propane dianhydride, 2,2-bis(4-phenoxyphenyl)propanetetracarboxylic dianhydride, 3,4,9,10-perylenetetracarboxylic dianhydride, bis(3,4-dicarboxyphenyl)propane dianhydride, 1,1-bis(2,3-dicarboxyphenyl)ethane dianhydride, 1,1-bis(3,4-dicarboxyphenyl)ethane dianhydride, bis(2,3-dicarboxyphenyl)methane dianhydride, bis(3,4-dicarboxyphenyl)ethane dianhydride, oxydiphthalic dianhydride, bis(3,4-dicarboxyphenyl)sulfone dianhydride, p-phenylenebis(trimellitic monoester anhydride), ethylenebis(trimellitic monoester anhydride), bisphenol A bis(trimellitic monoester anhydride), and analogues of them.

Among the tetracarboxylic dianhydrides except 3,3',4,4'-biphenyltetracarboxylic dianhydride, pyromellitic dianhydride, 3,3',4,4'-benzophenonetetracarboxylic dianhydride, 4,4'-oxyphthalic dianhydride, 2,3,3',4'-biphenyltetracarboxylic dianhydride, and 2,2-bis(4-phenoxyphenyl)propanetetracarboxylic dianhydride are preferably used from the viewpoint of industrially easy availability. The tetracarboxylic dianhydrides except 3,3',4,4'-biphenyltetracarboxylic dianhydride may be used singly or may be used in combination of two or more of them.

Examples of the diamine compound except 4,4'-oxydianiline include 4,4'-diaminodiphenylpropane, 4,4'-diaminodiphenylmethane, benzidine, 3,3'-dichlorobenzidine, 3,3'-dimethylbenzidine, 2,2'-dimethylbenzidine, 3,3'-dimethoxybenzidine, 2,2'-dimethoxybenzidine, 4,4'-diaminodiphenyl sulfide, 3,3'-diaminodiphenylsulfone, 4,4'-diaminodiphenylsulfone, 3,3'-oxydianiline, 3,4'-oxydianiline, 1,5-diaminonaphthalene, 4,4'-diaminodiphenyldiethylsilane, 4,4'-diaminodiphenylsilane, 4,4'-diaminodiphenylethylphosphine oxide, 4,4'-diaminodiphenyl-N-methylamine, 4,4'-diaminodiphenyl-N-phenylamine, 1,4-diaminobenzene (p-phenylenediamine), 1,3-diaminobenzene, 1,2-diaminobenzene, bis{4-(4-aminophenoxy)phenyl}sulfone, bis{4-(4-aminophenoxy)phenyl}propane, bis{4-(3-aminophenoxy)phenyl}sulfone, 4,4'-bis(4-aminophenoxy)biphenyl, 4,4'-bis(3-aminophenoxy)biphenyl, 1,3-bis(3-aminophenoxy)benzone, 1,3-bis(4-aminophenoxy)benzene, 3,3'-diaminobenzophenone, 4,4'-diaminobenzophenone, and analogues of them.

Among the diamine compounds except 4,4'-oxydianiline, 4,4'-diaminodiphenylpropane, 4,4'-diaminodiphenylmethane, 4,4'-diaminodiphenylsulfone, 3,3'-oxydianiline, 3,4'-oxydianiline, 1,5-diaminonaphthalene, 4,4'-diaminodiphenylsilane, 4,4'-diaminodiphenylethylphosphine oxide, 4,4'-diaminodiphenyl-N-methylamine, 4,4'-diaminodiphenyl-N-phenylamine, 1,4-diaminobenzene (p-phenylenediamine), 1,3-diaminobenzene, 1,2-diaminobenzene, bis{4-(4-aminophenoxy)phenyl}sulfone, bis{4-(4-aminophenoxy)phenyl}propane, bis{4-(3-aminophenoxy)phenyl}sulfone, 4,4'-bis(4-aminophenoxy)biphenyl, 4,4'-bis(3-aminophenoxy)biphenyl, 1,3-bis(3-aminophenoxy)benzene, 1,3-bis(4-aminophenoxy)benzene, 3,3'-diaminobenzophenone, and 4,4'-diaminobenzophenone are preferably used from the viewpoint of industrially easy availability. The diamine compounds except 4,4'-oxydianiline may be used singly or may be used in combination of two or more of them.

The amount of 3,3',4,4'-biphenyltetracarboxylic dianhydride in the tetracarboxylic dianhydride is not particularly limited but is preferably 50 to 100% by mol and more preferably 70 to 100% by mol based on the total amount of the tetracarboxylic dianhydride (the total mole number is regarded as 100% by mol) in order to obtain an electrically conductive polyimide film having high electric conductivity.

The amount of 4,4'-oxydianiline in the diamine compound is not particularly limited but is preferably 50 to 100% by mol and more preferably 70 to 100% by mol based on the total amount of the diamine compound (the total mole number is regarded as 100% by mol) in order to obtain an electrically conductive polyimide film having high electric conductivity.

A tetracarboxylic dianhydride containing 3,3',4,4'-biphenyltetracarboxylic dianhydride in the preferred range or a diamine compound containing 4,4'-oxydianiline in the preferred range readily produces an electrically conductive polyimide film having excellent electric conductivity or excellent mechanical properties. Furthermore, containing both compounds in the preferred ranges leads to easy production of an electrically conductive polyimide film having both of excellent electric conductivity and excellent mechanical properties.

In then production process of the present invention the tetracarboxylic dianhydride includes, together with 3,3',4,4'-biphenyltetracarboxylic dianhydride, 3,3',4,4'-benzophenonetetracarboxylic dianhydride as the tetracarboxylic dianhydrides except 3,3',4,4'-biphenyltetracarboxylic dianhydride and/or the diamine compound further includes, together with 4,4'-oxydianiline, p-phenylenediamine as the diamine compound except 4,4'-oxydianiline. By using such a tetracarboxylic dianhydride and/or a diamine compound, an electrically conductive polyimide film having an electric resistivity that is controlled in a desired range and including a remarkably small number of pinholes can be obtained. A small number of pinholes lead to further improvement in mechanical properties of an electrically conductive polyimide film.

The present inventors have found that, in the process of imidization in which an electrically conductive polyimide film is produced by a chemical imidization method, pinholes are generated separately from the reaggregation of carbon black. As a result of further studies to address this, the present inventors have found that a polyimide having a particular molecular structure can suppress not only the generation of pinholes but also the reaggregation of carbon black.

It is revealed that the imidization of a polyamic acid (A) obtained by using one or both of a tetracarboxylic dianhydride containing 3,3',4,4'-biphenyltetracarboxylic dianhydride and further containing 3,3',4,4'-benzophenonetetracarboxylic dianhydride and a diamine compound containing 4,4'-oxydianiline and further containing p-phenylenediamine can suppress the generation of pinholes and the reaggregation of carbon black.

As a result, an electrically conductive polyimide film having a desired electric resistivity, excellent electric characteristics, and further improved mechanical properties can be obtained. In addition, the electrically conductive polyimide film obtained by the present embodiment achieves almost equal quality to that of an electrically conductive polyimide film produced by the thermal imidization method, and the electrically conductive polyimide film is produced with largely improved productivity in comparison with the thermal imidization method.

In the present embodiment, when the tetracarboxylic dianhydride contains 3,3',4,4'-biphenyltetracarboxylic dianhydride and 3,3',4,4'-benzophenonetetracarboxylic dianhydride, a diamine compound containing 4,4'-oxydianiline and optionally containing p-phenylenediamine can be used. Similarly, when the diamine compound contains 4,4'-oxydianiline and p-phenylenediamine, a tetracarboxylic dianhydride containing 3,3',4,4'-biphenyltetracarboxylic dianhydride and optionally containing 3,3',4,4'-benzophenonetetracarboxylic dianhydride can be used.

However, in order to readily obtain an electrically conductive polyimide film that has desired electric resistivity and in which the generation of pinholes is suppressed, a tetracarboxylic dianhydride containing 3,3',4,4'-biphenyltetracarboxylic dianhydride and 3,3',4,4'-benzophenonetetracarboxylic dianhydride and a diamine compound containing 4,4'-oxydianiline and p-phenylenediamine are preferably used to synthesize the polyamic acid (A).

In the tetracarboxylic dianhydride, the amount of 3,3',4,4'-biphenyltetracarboxylic dianhydride is not particularly limited, but is preferably 10 to 100% by mol, more preferably 20 to 90% by mol, and even more preferably 30 to 70% by mol, based on the total amount of the tetracarboxylic dianhydride (the total mole number is regarded as 100% by mol) in order to obtain an electrically conductive polyimide film having a desired electric conductivity

In the tetracarboxylic dianhydride, the amount of 3,3',4,4'-benzophenonetetracarboxylic dianhydride is not particularly limited, but is preferably 0 to 90% by mol, more preferably 10 to 80% by mol, and even more preferably 30 to 70% by mol, based on the total amount of the tetracarboxylic dianhydride (the total mole number is regarded as 100% by mol).

The tetracarboxylic dianhydride of the embodiment may contain at least one tetracarboxylic dianhydride except 3,3',4,4'-biphenyltetracarboxylic dianhydride and 3,3',4,4'-benzophenonetetracarboxylic dianhydride.

In the diamine compound, the amount of 4,4'-oxydianiline is not particularly limited, but is preferably 50 to 100% by mol, more preferably 60 to 95% by mol, and even more preferably 70 to 90% by mol, based on the total amount of the diamine compound (the total mole number is regarded as 100% by mol) in order to readily obtain an electrically conductive polyimide film having a desired electric conductivity.

In the diamine compound, the amount of p-phenylenediamine is not particularly limited, but is preferably 0 to 50% by mol, more preferably 5 to 40% by mol, and even more preferably 10 to 30% by mol, based on the total amount of the diamine compound (the total mole number is regarded as 100% by mol).

The diamine compound of the embodiment may contain at least one diamine compound except 4,4'-oxydianiline and p-phenylenediamine.

The polyamic acid can be produced by any known method for producing a polyamic acid. For example, the predetermined tetracarboxylic dianhydride and the predetermined diamine compound are used in a substantially equal molar amount to each other and are dissolved in an organic solvent. The whole is stirred under a controlled temperature condition until the polymerization is completed, and a polyamic acid is consequently produced.

As a preferred organic solvent for synthesizing the polyamic acid, any organic solvent capable of dissolving the polyamic acid can be used, and among them, a polar amidic organic solvent is preferred. Examples of the polar amidic organic solvent include N,N-dimethylformamide, N,N-diethylformamide, N,N-dimethylacetamide, and N-methyl-2-pyrralidone, and N,N-dimethylformamide and N,N-dimethylacetamide are preferred. These solvents may be used singly or may be used in combination of two or more of them.

Usable examples of an organic solvent except the polar amidic organic solvent also include sulfoxides such as dimethyl sulfoxide; phenols such as cresol, phenol, and xylenol; nitriles such as benzonitrile; ethers such as dioxane; lactones such as butyrolactone; alicyclic hydrocarbons such as cyclohexane; aliphatic hydrocarbons such as hexane; and aromatic hydrocarbons such as xylene, benzene, and toluene. These solvents may also be used singly or in combination of two or more of them.

As the polymerization method of the tetracarboxylic dianhydride and the diamine compound, any known methods and a method in combination of them may be employed. One of the characters of the polymerization method for producing a polyamic acid is the order of addition of monomers. By designing the order of addition of monomers, a polyimide to be finally obtained can have designed physical properties. In the present invention, the polymerization of the polyamic acid may employ any methods for adding monomers. As typical polymerization methods, the following methods 1) to 5) can be exemplified. One of these methods may be used singly and two or more of the methods may be partially integrated to be used.

1) A polymerization method of dissolving a diamine compound in a polar organic solvent; and reacting the dissolved diamine compound with a tetracarboxylic dianhydride in a substantially equimolecular amount to that of the diamine compound.
2) A polymerization method of reacting a tetracarboxylic dianhydride with a diamine compound in a smaller molar amount than that of the tetracarboxylic dianhydride in a polar organic solvent to afford a prepolymer having both ends with an acid anhydride group; and subsequently, using and polymerizing the obtained prepolymer and the diamine compound so that the tetracarboxylic dianhydride and the diamine compound are used in a substantially equimolecular amount in the method.
3) A polymerization method of reacting a tetracarboxylic dianhydride with a diamine compound in a larger molar amount than that of the tetracarboxylic dianhydride in a polar organic solvent to afford a prepolymer having both ends with an amino group; subsequently, further adding the diamine compound to the prepolymer; and then performing polymerization using the tetracarboxylic dianhydride so that the tetracarboxylic dianhydride and the diamine compound are used in a substantially equimolecular amount in the method.
4) A polymerization method of dissolving and/or dispersing a tetracarboxylic dianhydride in a polar organic solvent; and then using a diamine compound in a substantially equimolecular amount to that of the tetracarboxylic dianhydride for polymerization.
5) A polymerization method of reacting a mixture of a tetracarboxylic dianhydride and a diamine compound in a substantially equimolecular amount to each other in a polar organic solvent for polymerization

In order to increase the degree of polymerization of a polyamic acid to be obtained, an organic acid or an inorganic acid may be added into a reaction solution in an adequate amount. Examples of the organic acid include formic acid, acetic acid, propionic acid, and butyric acid. Examples of the inorganic acid include phosphoric acid and carbonic acid. These acids may be used singly or may be used in combination of two or more of them.

The amount of an organic acid or an inorganic acid added in order to increase the degree of polymerization of a polyamic acid is not uniquely determined. For example, the amount is preferably 50 parts by weight or less and more preferably 10 parts by weight or less with respect to 100 parts by weight of a polar organic solvent. An organic acid or an inorganic acid added in an amount of more than 50 parts by weight cannot provide further effect by the addition of the organic acid or the inorganic acid. In addition, such an acid may decompose a polymerized polyamic acid, and thus is not preferred.

The production method of a polyamic acid can produce a polyamic acid in a polyamic acid solution form. The polyamic acid solution is preferably obtained in a polyamic acid concentration of 5 to 35% by weight and more preferably 10 to 30% by weight. A polyamic acid in such a concentration range can provide a polyamic acid having an appropriate molar weight and a polyamic acid solution in an appropriate viscosity range. The polyamic acid solution can be used as the component (A) without treatment.

The conductivity-imparting agent (B) is not particularly limited as long as the agent is an electrically-conductive material capable of being mixed in a synthetic resin. An electrically-conductive filler capable of being contained in what is called a filler electrically-conductive resin composition can be preferably used. As such an electrically-conductive filler, known fillers can be used. Examples of the electrically-conductive filler include carbon conductive particles and metal particles such as aluminum particles, stainless steel (SUS) particles, silver particles, gold particles, copper particles, titanium particles, and particles of an alloy. Among them, carbon conductive particles can be preferably used because, for example, they have a small specific gravity and readily achieve weight reduction of an electrically conductive polyimide film. Examples of the carbon conductive particles include carbon black such as Ketjenblack (registered trademark), acetylene black, and oil furnace black and carbon nanotubes. Among them, Ketjenblack and carbon nanotubes are particularly preferably used because such a material itself has a relatively high electric conductivity and a small amount of addition of such a material to a resin easily achieves a desired high electric conductivity.

The amount of the conductivity-imparting agent is preferably 1 to 50 parts by weight and more preferably 5 to 20 parts by weight based on 100 parts by weight of the polyamic acid. A conductivity-imparting agent contained in an amount of less than 1 part by weight may lead to the reduction in the electric conductivity of an electrically conductive polyimide film, thereby impairing the function as an electrically conductive film. Conversely, a conductivity-imparting agent contained in an amount of more than 50 parts by weight may lead to the reduction in the mechanical properties of an electrically conductive polyimide film to be obtained, and thus the film may be difficult to be handled.

As a method for preparing a composite of the polyamic acid and the conductivity-imparting agent, that is, a method for preparing a polyamic acid solution dispersing the conductivity-imparting agent, any methods may be employed and the following methods (i) to (iii) are exemplified.
(i) A method of adding a conductivity-imparting agent to a polymerization reaction solution before or during polymerization.
(ii) A method of kneading a polyamic acid solution and a conductivity-imparting agent using a triple roll mill or other tools after the completion of polymerization.
(iii) A method of mixing a dispersion liquid containing a conductivity-imparting agent to a polyamic acid solution.

Among these methods, the method (iii) of mixing a dispersion liquid containing a conductivity-imparting agent to a polyamic acid solution, especially a method of mixing a dispersion liquid containing a conductivity-imparting agent to a polyamic acid solution immediately before the formation of a coating film is preferred because the method can suppress the contamination of a production line by the conductivity-imparting agent to a minimum. In the dispersion liquid containing a conductivity-imparting agent, the same organic solvent as the organic solvent used for the polymerization of the polyamic acid is preferably used. In order to finely disperse the conductivity-imparting agent and to stabilize the dispersion state, a dispersant, a thickener, and other agents may be used as long as film physical properties are not impaired. The polyamic acid solution as the component (A) is preferably added in a small amount as the dispersant because the conductivity-imparting agent can be stably dispersed without aggregation.

For preparing the composite, a ball mill, a bead mill, a sand mill, a colloid mill, a jet mill, a roller mill, and other machines are preferably used as a disperser. A polyamic acid solution in which the conductivity-imparting agent is dispersed with a disperser such as a bead mill and a ball mill into a flowable liquid state is easy to be handled in a film formation process described later. The median diameter is not particularly limited but is preferably 10 mm or less.

In order to improve various film characteristics such as slipping properties, slidability, heat conductivity, corona resistant properties, and loop stiffness of the electrically conductive polyimide film to be finally obtained, a filler may be used. Any filler may be used, and preferred examples include metal oxides such as titanium oxide and alumina; nitrides such as silicon nitride and boron nitride; phosphates such as calcium hydrogen phosphate and calcium phosphate; silica; and mica.

The particle size of a filler is not particularly limited because it is determined depending on film characteristics to be modified and the type of a filler to be added. Typically, the average particle size is preferably 0.05 to 100 µm, more preferably 0.1 to 75 µm, even more preferably 0.1 to 50 µm, and particularly preferably 0.1 to 25 µm. A filler having an average particle size of less than the range may be unlikely to provide a modifying effect. A filler having an average particle size of more than the range may greatly impair surface properties or may greatly reduce mechanical properties.

The amount of the filler is not particularly limited because it is determined depending on film characteristics to be modified and the particle size of a filler. Typically, the amount of a filler is preferably 0.01 to 100 parts by weight, more preferably 0.01 to 90 parts by weight, and even more preferably 0.02 to 80 parts by weight, with respect to 100 parts by weight of the polyimide. A filler contained in an amount less than the range may be unlikely to provide a modifying effect by the filler. A filler contained in an amount more than the range may greatly impair the mechanical properties of an electrically conductive polyimide film.

The filler can be added in a similar manner to that in the preparation of a composite and the dispersion method. The filler may be added at the same time when preparing the composite of the conductivity-imparting agent and dispersing the conductivity-imparting agent and may be added independently.

In the production process of the present invention, the polyamic acid is transformed into a polyimide by a chemical imidization method using an imidization accelerator (C). Hence, drying and heating can be performed in a short period of time. The production process therefore has excellent productivity.

The imidization accelerator is only required to contain a catalyst and a chemical dehydrating agent and may further contain an organic solvent in addition to these agents. The organic solvent is preferably the same organic solvent as that contained in the polyamic acid solution.

The catalyst is not particularly limited and a tertiary amine compound having an adequate activity with respect to imidization reaction can be used. An aromatic tertiary amine compound can be suitably used because an electrically conductive polyimide film having excellent mechanical properties is readily obtained. Specifically preferred examples of the aromatic tertiary amine compound include quinoline, isoquinoline, 3,5-dimethylpyridine, 3,5-diethylpyridine, α-picoline, β-picoline, and γ-picoline. These aromatic tertiary amine compounds may be used singly or may be used in combination of two or more of them.

The amount of the catalyst is preferably 0.1 to 4.0 molar equivalents, more preferably 0.3 to 3.0 molar equivalents, and even more preferably 0.5 to 2.0 molar equivalents, with respect to 1 mol of amic acid in the polyamic acid. A catalyst used in an amount of less than 0.1 molar equivalent achieves insufficient catalytic action, and hence the imidization does not completely proceed. This may cause a problem of reduction in the mechanical properties of an electrically conductive polyimide film to be obtained. Such a catalyst may also cause a problem of breaking a film during a drying and heating process. A catalyst used in an amount of more than 4.0 molar equivalents achieves little effect by the increased amount, and an organic solvent in such a condition is difficult to be evaporated even by drying and heating in a film formation process described later. As a result, an organic solvent remains in a large amount, and this may also reduce the mechanical properties of an electrically conductive polyimide film to be obtained. In addition, the imidization may proceed too fast, and even when a coating film is applied onto a support, a coating film may be unlikely to be formed.

The chemical dehydrating agent is not particularly limited. For example, aliphatic anhydrides, aromatic anhydrides, and halogenated lower fatty anhydrides can be suitably used. These chemical dehydrating agents may be used singly or may be used in combination of two or more of them. Among the chemical dehydrating agents, specifically preferred compounds are acetic anhydride and propionic anhydride. These compounds may be used singly or may be used in combination of two or more of them.

The amount of the chemical dehydrating agent is preferably 1.0 to 5.0 molar equivalents, more preferably 1.2 to 4.0 molar equivalents, and even more preferably 1.5 to 3.0 molar equivalents, with respect to 1 mol of amic acid in the polyamic acid. A chemical dehydrating agent used in an amount of less than 1.0 molar equivalent leads to incomplete imidization by the action of the chemical dehydrating agent, and this may cause a problem of breaking a film during a drying and heating process or of reducing mechanical properties of an electrically conductive polyimide film to be obtained. A chemical dehydrating agent used in an amount of more than 5.0 molar equivalents leads to the progress of imidization in a short period of time, and such an imidization affords a gelled coating liquid. The application of the gelled coating liquid onto a support may be unlikely to achieve the formation of a coating film.

The imidization accelerator is added to the polyamic acid or a solution of the polyamic acid preferably at a temperature of 10°C or lower, more preferably 5°C or lower, and even more preferably 0°C or lower. Imidization at a higher temperature than 10°C proceeds in a short period of time to form a gelled coating liquid. The application of the gelled coating liquid onto a support may be unlikely to achieve the formation of a coating film.

In the production process of the present invention, a coating liquid containing the polyamic acid or a solution of the polyamic acid, the conductivity-imparting agent, and the imidization accelerator is applied onto a support surface, then the obtained coating film is dried and heated for imidization, and an electrically conductive polyimide film is consequently formed. This process is the film formation process.

As the coating method for forming a coating film, known methods such as die coating, spraying, roll coating, spin coating, bar coating, ink-jetting, screen printing, and slit coating can be appropriately adopted. Examples of the support include, but are not necessarily limited to, a metal drum, a metal belt, a metal foil, a metal plate, and a resin film separately prepared. The coating film is dried, for example, at a temperature from room temperature to about 200°C, thereby affording a self-supporting film. During the drying, the imidization proceeds to some extent.

The imidization of the self-supporting film after drying is carried out, for example, by fixing the film, then performing the first step heating of the film to about 300°C while appropriately selecting the heating speed, and performing the second step heating to a final temperature about 400°C to 600°C. For fixing the self-supporting film, a known method such as a pin tenter method, a clip tenter method, and a roll suspension method can be appropriately adopted and the method is not limited. This can afford an electrically conductive polyimide film.

The heating temperature during the imidization can be appropriately set, but a higher temperature readily causes imidization, thereby enabling the heating speed to be increased. Hence, a higher temperature is preferred from the viewpoint of productivity. However, an excessively high temperature may cause thermal decomposition. On the other hand, an excessively low heating temperature is unlikely to develop the imidization, and hence the film formation process requires a longer time.

The heating time is a sufficient time for substantially completing the drying and heating (imidization) and is not uniquely defined. Typically, the heating time is appropriately set within a range of about 1 to 600 seconds.

In the production process of the present invention, by appropriate setting of the thickness of a coating film on a support, of the concentration of a polyamic acid in a coating liquid, or of the weight of a conductivity-imparting agent in a coating liquid, the thickness of an electrically conductive polyimide film can be appropriately designed. The coating film preferably has a thickness of 1 to 1,000 µm. A coating film having a thickness of less than 1 µm may finally provide an electrically conductive polyimide film having poor mechanical properties, whereas a coating film having a thickness of more than 1,000 µm may flow on a support.

The finally obtained electrically conductive polyimide film preferably has a thickness of 1 to 100 µm and more preferably 5 to 50 µm. An electrically conductive polyimide film having a thickness of less than 1 µm may have poor mechanical properties. An electrically conductive polyimide film having a thickness of more than 100 µm is difficult to be evenly dried and imidized. Hence, the mechanical properties may vary or a partial defect such as foaming may be likely to be caused.

The production process of the present invention can desirably control the volume resistivity in a thickness direction and the surface resistivity of an electrically conductive polyimide film to be obtained, thereby appropriately designing the type of a polyimide, the type of a conductivity-imparting agent, and the amounts of them.

The electrically conductive polyimide film preferably has a volume resistivity in a thickness direction of 1.0 × 10⁻¹ to 1.0 × 10² Ωcm, more preferably 1.0 × 10⁻¹ to 8.0 × 10¹ Ωcm, and even more preferably 1.0 × 10⁻¹ to 5.0 × 10¹ Ωcm, from the viewpoint of usefulness as an alternative material to metallic electronic materials. The electrically conductive polyimide film preferably has a surface resistivity of 1.0 × 10¹ to 1.0 × 10⁴ Ω/□, more preferably 1.0 × 10¹ to 5.0 × 10³ Ω/□, and even more preferably 1.0 × 10¹ to 3.0 × 10³ Ω/□.

The electrically conductive polyimide film obtained by the production process of the present invention includes a conductivity-imparting agent of which reaggregation in a film formation process and other processes is suppressed, uses a conductivity-imparting agent in a minimum amount thereby to have a desired, relatively low volume resistivity and surface resistivity, and has a high electric conductivity.

The electrically conductive polyimide film obtained by the present invention can be stably used for a long period of time, for example, in metallic electronic materials, electrode materials in batteries, electromagnetic shielding materials, electrostatic adsorption films, antistatic agents, members in image forming apparatuses, and electronic devices, and can be suitably employed for these applications.

### Examples

The advantageous effects of the present invention will be described in further detail on the basis of Examples and Comparative Examples, but the present invention is not limited to them. A person skilled in the art may make various changes, modifications, and alterations without departing from the scope of the invention.

### (Volume Resistivity)

An electrically conductive polyimide film produced was cut into a size of 15 mm□, and on an area of 10 mm□ at the central part on each face of the film, a gold thin film was formed by sputtering. With each gold thin film obtained, a copper foil was brought into close contact while applying a pressure of 1 MPa, and the electric voltage V was determined when an electric current I was passed across two copper foils. The ratio of (measured value V)/I was regarded as a resistance value. For the measurement of the resistance value, an LCR resistance meter (trade name: LCR HiTESTER 3522-50, manufactured by Hioki E. E. Corporation) was used.

### (Surface Resistivity)

Using a low resistivity meter (trade name: LORESTA-GP MCP-T610, manufactured by Mitsubishi Chemical Analytech Co., Ltd.), a four-needle probe was pressed against the surface of an electrically conductive polyimide film produced, and the surface resistivity was measured.

### (Incidence of Pinholes)

From the back face of an electrically conductive polyimide film produced, light was applied. The light passing through the electrically conductive polyimide film was regarded as the presence of a pinhole and the number of pinholes was counted. From the number counted in an area of 10 m² on the electrically conductive polyimide film, the average incidence of pinholes per m² was calculated. As the light source, a xenon light (ULTRA STRINGER, manufactured by Stream) was used. An electrically conductive polyimide film with the number of pinholes generated of ten or less per m² is evaluated that the generation of pinholes is suppressed.

### (Heating Time: Productivity)

In Examples and Comparative Examples, each time (seconds) required for drying and heating of a coating liquid (carbon-dispersed polyamic acid solution) cast on an aluminum foil or a PET film was determined and the sum of the times was calculated as the heating time. A coating liquid requiring a heating time of 600 seconds or less is evaluated as excellent productivity.

### (Mechanical Properties: Production Stability)

The mechanical properties were evaluated on the bases of the following criteria on production stability.
A: An electrically conductive polyimide film having a width of 100 cm can be produced without sliding from a pin fixation portion.
B: A pin fixation portion may be expanded and hence an electrically conductive polyimide film obtained has a width of less than 100 cm.
C: A pin fixation portion is torn and an electrically conductive polyimide film slides down.
D: No self-supporting film is obtained.

### (Example 1, not according to the invention)

Into a stainless steel pot having a capacity of 500 liters, 220.5 kg of N,N-dimethylacetamide (an organic solvent, hereinafter called "DMAc") was poured, and 16.4 kg (81.95 mol) of 4,4'-oxydianiline (hereinafter called "ODA") was dissolved. To the solution, 23.62 kg (80.25 mol) of 3,3',4,4'-biphenyltetracarboxylic dianhydride (hereinafter called "BPDA") was added, and the whole was stirred and reacted. Next, a slurry containing 9 kg of DMAc and 0.48 kg (1.7 mol) of BPDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and N,N-dimethylformamide (hereinafter called "DMF") in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

To 150 kg of the carbon-dispersed polyamic acid solution (containing 69.2 mol of amic acid), an imidization accelerator containing 4.5 kg (34.6 mol) of isoquinoline, 10.6 kg (103.8 mol) of acetic anhydride, and 17.9 kg of DMF was added. The obtained homogeneous coating liquid was cast on an aluminum foil so as to give a final thickness of 12.5 µm and a width of 100 cm, and the aluminum foil with the coating liquid was dried at 160°C for 70 seconds. The self-supporting film after drying was released from the aluminum foil, and then was fixed to a pin tenter. The self-supporting film was heated at 300°C for 11 seconds, and then was continuously heated at 450°C for 60 seconds, thereby affording an electrically conductive polyimide film.

The volume resistivity and the surface resistivity of the obtained electrically conductive polyimide film were measured, and the mechanical properties of the obtained film were evaluated. Table 1 shows the results.

### (Comparative Example 1)

On a PET film (trade name: SG-1, manufactured by Panac Co., Ltd.), 150 kg of the carbon-dispersed polyamic acid solution (containing 69.2 mol of amic acid) obtained in the same manner as in Example 1 was cast so as to give a final thickness of 12.5 µm and a width of 100 cm. Then, the PET film with the solution was dried at 160°C for 70 seconds in the same manner as in Example 1. However, no self-supporting film was formed, and hence an electrically conductive polyimide film could not be obtained.

### (Comparative Example 2)

On a PET film (SG-1), 150 kg of the carbon-dispersed polyamic acid solution (containing 69.2 mol of amic acid) obtained in the same manner as in Example 1 was cast so as to give a final thickness of 12.5 µm and a width of 100 cm. Then, the PET film with the solution was dried at 70°C for 600 seconds. The self-supporting film after drying was released from the PET film, and then was fixed to a pin tenter. The self-supporting film was heated while raising the temperature from 160°C to 300°C over 450 seconds, and then was continuously heated at 400°C for 180 seconds, thereby affording an electrically conductive polyimide film.

The volume resistivity and the surface resistivity of the obtained electrically conductive polyimide film were measured, and the mechanical properties of the obtained film were evaluated. Table 1 shows the results.

### (Comparative Example 3)

Into a stainless steel pot having a capacity of 500 liters, 220.5 kg of DMF was poured, and 10.9 kg (100.7 mol) of p-phenylenediamine (hereinafter called "p-PDA") was dissolved. To the solution, 29 kg (98.6 mol) of BPDA was added, and the whole was stirred and reacted. Then, a slurry containing 9 kg of DMF and 0.6 kg (2.1 mol) of BPDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

On a PET film (SG-1), 150 kg of the carbon-dispersed polyamic acid solution (containing 69.2 mol of amic acid) was cast so as to give a final thickness of 12.5 µm and a width of 100 cm. Then, the PET film with the solution was dried at 70°C for 600 seconds. The self-supporting film after drying was released from the PET film, and then was fixed to a pin tenter. The self-supporting film was heated while raising the temperature from 160°C to 300°C over 450 seconds, and then was continuously heated at 400°C for 180 seconds, thereby affording an electrically conductive polyimide film.

The volume resistivity and the surface resistivity of the obtained electrically conductive polyimide film were measured, and the mechanical properties of the obtained film were evaluated. Table 1 shows the results.

### (Comparative Example 4)

Into a stainless steel pot having a capacity of 500 liters, 220.5 kg of DMF was poured, and 19.4 kg (96.8 mol) of ODA was dissolved. To the solution, 20.7 kg (94.9 mol) of pyromellitic dianhydride (hereinafter called "PMDA") was added, and the whole was stirred and reacted. Next, a solution containing 9 kg of DMF and 0.42 kg (1.9 mol) of PMDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

On a PET film (SG-1), 150 kg of the carbon-dispersed polyamic acid solution (containing 69.2 mol of amic acid) was cast so as to give a final thickness of 12.5 µm and a width of 100 cm. Then, the PET film with the solution was dried at 70°C for 600 seconds. The self-supporting film after drying was released from the PET film, and then was fixed to a pin tenter. The self-supporting film was heated while raising the temperature from 160°C to 300°C over 450 seconds, and then was continuously heated at 400°C for 180 seconds, thereby affording an electrically conductive polyimide film.

The volume resistivity and the surface resistivity of the obtained electrically conductive polyimide film were measured, and the mechanical properties of the obtained film were evaluated. Table 1 shows the results.

**[Table 1]**

| | Example 1 | | Comparative Examples 1 | | Comparative Example 2 | | Comparative Example 3 | | Comparative Example 4 | |
|---|---|---|---|---|---|---|---|---|---|---|
| Polymerization formulation (molar ratio) | BPDA | 100 | BPDA | 100 | BPDA | 100 | BPDA | 100 | | |
| | | | | | | | | | PMDA | 100 |
| | ODA | 100 | ODA | 100 | ODA | 100 | | | ODA | 100 |
| | | | | | | | p-FDA | 100 | | |
| Conductivity-imparting agent (parts by weight) | EC600JD | 10 | EC600JD | 10 | EC600JD | 10 | EC600JD | 10 | EC600JD | 10 |
| Imidization accelerator (molar equivalent with respect to 1 mol of amic acid) | Isoquinoline | 0.5 | Isoquinoline | 0 | Isoquinoline | 0 | Isoquinoline | 0 | Isoquinoline | 0 |
| | Acetic anhydride | 1.5 | Acetic anhydride | 0 | Acetic anhydride | 0 | Acetic anhydride | 0 | Acetic anhydride | 0 |
| Heating time (seconds) | 141 | | 70 | | 1230 | | 1230 | | 1230 | |
| Film thickness (µm) | 12.5 | | 12.5 | | 12.5 | | 12.5 | | 12.5 | |
| Volume resistivity (Ωcm) | 2.0×10¹ | | - | | 1.9×10¹ | | 2.4×10¹ | | 2.3×10¹ | |
| Surface resistivity (Ω/□) | 1.2×10³ | | - | | 1.2×10³ | | 1.2×10³ | | 1.5×10³ | |
| Mechanical properties | A | | D | | A | | C | | C | |

### (Example 2)

Into a stainless steel pot having a capacity of 500 liters, 220.5 kg of DMF was poured, and 9.88 kg (49.35 mol) of ODA and 5.34 kg (49.35 mol) of p-PDA were dissolved. To the solution, 14.5 kg (49.35 mol) of BPDA and 10.4 kg (47.37 mol) of PMDA were added, and the whole was stirred and reacted. Next, a solution containing 9 kg of DMF and 0.4 kg (1.98 mol) of PMDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

To 150 kg of the carbon-dispersed polyamic acid solution (containing 83.4 mol of amic acid), an imidization accelerator containing 5.4 kg (41.7 mol) of isoquinoline, 12.8 kg (125.1 Mol) of acetic anhydride, and 14.8 kg of DMF was added. The obtained homogeneous coating liquid was cast on an aluminum foil so as to give a final thickness of 12.5 µm and a width of 100 cm, and the aluminum foil with the coating liquid was dried at 160°C for 70 seconds. The self-supporting film after drying was released from the aluminum foil, and then was fixed to a pin tenter. The self-supporting film was heated at 300°C for 11 seconds, and then was continuously heated at 450°C for 60 seconds, thereby affording an electrically conductive polyimide film.

The volume resistivity and the surface resistivity of the obtained electrically conductive polyimide film were measured, and the mechanical properties of the obtained film were evaluated. Table 2 shows the results.

### (Example 3)

Into a stainless steel pot having a capacity of 500 liters, 220.5 kg of DMF was poured, and 9.04 kg (45.16 mol) of ODA and 4.88 kg (45.16 mol) of p-PDA were dissolved. To the solution, 26.0 kg (88.5 mol) of BPDA was added, and the whole was stirred and reacted. Next, a slurry containing 9 kg of DMF and 0.53 kg (1.80 mol) of BPDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

To 150 kg of the carbon-dispersed polyamic acid solution (containing 76.3 mol of amic acid), an imidization accelerator containing 4.9 kg (38.2 mol) of isoquinoline, 11.7 kg (114.4 mol) of acetic anhydride, and 16.4 kg of DMF was added. The obtained homogeneous coating liquid was cast on an aluminum foil so as to give a final thickness of 12.5 µm and a width of 100 cm, and the aluminum foil with the coating liquid was dried at 160C for 70 seconds. The self-supporting film after drying was released from the aluminum foil, and then was fixed to a pin tenter. The self-supporting film was heated at 300°C for 11 seconds, and then was continuously heated at 450°C for 60 seconds, thereby affording an electrically conductive polyimide film.

The volume resistivity and the surface resistivity of the obtained electrically conductive polyimide film were measured, and the mechanical properties of the obtained film were evaluated. Table 2 shows the results.

### (Example 4)

Into a stainless steel pot having a capacity of 500 liters, 220.5 kg of DMF was poured, and 17.77 kg (88.74 mol) of ODA was dissolved. To the solution, 13.1 kg (44.4 mol) of BPDA and 9.3 kg (42.6 mol) of PMDA were added, and the whole was stirred and reacted. Next, a solution containing 9 kg of DMF and 0.4 kg (1.8 mol) of PMDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

To 150 kg of the carbon-dispersed polyamic acid solution (containing 75.0 mol of amic acid), an imidization accelerator containing 4.84 kg (37.5 mol) of isoquinoline, 11.5 kg (112.5 mol) of acetic anhydride, and 16.4 kg of DMF was added. The obtained homogeneous coating liquid was cast on an aluminum foil so as to give a final thickness of 12.5 µm and a width of 100 cm, and the aluminum foil with the coating liquid was dried at 160°C for 70 seconds. The self-supporting film after drying was released from the aluminum foil, and then was fixed to a pin tenter. The self-supporting film was heated at 300°C for 11 seconds, and then was continuously heated at 450°C for 60 seconds, thereby affording an electrically conductive polyimide film.

The volume resistivity and the surface resistivity of the obtained electrically conductive polyimide film were measured, and the mechanical properties of the obtained film were evaluated. Table 2 shows the results.

### (Example 5)

Into a stainless steel pot having a capacity of 500 liters, 220.5 kg of DMF was poured, and 4.5 kg (22.5 mol) of ODA and 9.7 kg (90 mol) of p-PDA were dissolved. To the solution, 6.62 kg (22.5 mol) of BPDA and 19.1 kg (87.8 mol) of PMDA were added, and the whole was stirred and reacted. Next, a solution containing 9 kg of DMF and 0.49 kg (2.2 mol) of PMDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

To 150 kg of the carbon-dispersed polyamic acid solution (containing 95.1 mol of amic acid), an imidization accelerator containing 6.1 kg (47.6 mol) of isoquinoline, 14.6 kg (142.7 mol) of acetic anhydride, and 12.3 kg of DMF was added. The obtained homogeneous coating liquid was cast on an aluminum foil so as to give a final thickness of 12.5 µm and a width of 100 cm, and the aluminum foil with the coating liquid was dried at 160°C for 70 seconds. The self-supporting film after drying was released from the aluminum foil, and then was fixed to a pin tenter. The self-supporting film was heated at 300°C for 11 seconds, and then was continuously heated at 450°C for 60 seconds, thereby affording an electrically conductive polyimide film.

The volume resistivity and the surface resistivity of the obtained electrically conductive polyimide film were measured, and the mechanical properties of the obtained film were evaluated. Table 2 shows the results.

### (Comparative Example 5)

Into a stainless steel pot having a capacity of 500 liters, 220.5 kg of DMF was poured, and 10.9 kg (100.7 mol) of p-PDA was dissolved. To the solution, 29 kg (98.6 mol) of BPDA was added, and the whole was stirred and reacted. Then, a slurry containing 9 kg of DMF and 0.6 kg (2.1 mol) of BPDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

To 150 kg of the carbon-dispersed polyamic acid solution (containing 85.0 mol of amic acid), an imidization accelerator containing 5.5 kg (42.5 mol) of isoquinoline, 13.0 kg (127.5 mol) of acetic anhydride, and 14.5 kg of DMF was added. The obtained homogeneous coating liquid was cast on an aluminum foil so as to give a final thickness of 12.5 µm and a width of 100 cm, and the aluminum foil with the coating liquid was dried at 160°C for 70 seconds. The self-supporting film after drying was released from the aluminum foil, and then was fixed to a pin tenter. The self-supporting film was heated at 300°C for 11 seconds, and then was continuously heated at 450°C for 60 seconds, thereby affording an electrically conductive polyimide film.

The volume resistivity and the surface resistivity of the obtained electrically conductive polyimide film were measured, and the mechanical properties of the obtained film were evaluated. Table 2 shows the results.

### (Comparative Example 6)

Into a stainless steel pot having a capacity of 500 liters, 220.5 kg of DMF was poured, and 19.4 kg (96.8 mol) of ODA was dissolved. To the solution, 20.7 kg (94.9 mol) of PMDA was added, and the whole was stirred and reacted. Next, a solution containing 9 kg of DMF and 0.42 kg (1.9 mol) of PMDA was gradually added while carefully observing the viscosity of the reaction solution. When the viscosity reached 200 Pa•s, the addition and stirring was stopped, and a polyamic acid solution having a solid content concentration of 15% by weight was obtained.

A mixture of the polyamic acid solution, Ketjenblack (trade name: ECP600JD, manufactured by Lion Corporation), and DMF in a weight ratio of 10 : 1 : 20 was subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, the carbon dispersion liquid and the polyamic acid solution were homogeneously mixed in a weight ratio of 100 : 183 to afford a carbon-dispersed polyamic acid solution. The solution contained 10 parts by weight of Ketjenblack with respect to 100 parts by weight of polyamic acid.

To 150 kg of the carbon-dispersed polyamic acid solution (containing 81.8 mol of amic acid), an imidization accelerator containing 5.3 kg (40.9 mol) of isoquinoline, 12.5 kg (122.7 mol) of acetic anhydride, and 15.2 kg of DMF was added. The obtained homogeneous coating liquid was cast on an aluminum foil so as to give a final thickness of 12.5 µm and a width of 100 cm, and the aluminum foil with the coating liquid was dried at 160°C for 70 seconds. The self-supporting film after drying was released from the aluminum foil, and then was fixed to a pin tenter. The self-supporting film was heated at 300°C for 11 seconds, and then was continuously heated at 450°C for 60 seconds, thereby affording an electrically conductive polyimide film.

The volume resistivity and the surface resistivity of the obtained electrically conductive polyimide film were measured, and the mechanical properties of the obtained film were evaluated. Table 2 shows the results.

**[Table 2]**

| | Example 2 | | Example 3 | | Example 4 | | Example 5 | | Comparative Example 5 | | Comparative Example 6 | |
|---|---|---|---|---|---|---|---|---|---|---|---|---|
| Polymerization formulation (molar ratio) | BPDA | 50 | BPDA | 100 | BPDA | 50 | BPDA | 20 | BPDA | 100 | | |
| | PMDA | 50 | | | PMDA | 50 | PMDA | 80 | | | PMDA | 100 |
| | ODA | 50 | ODA | 50 | ODA | 100 | ODA | 20 | | | ODA | 100 |
| | p-PDA | 50 | p-PDA | 50 | | | p-PDA | 80 | p-PDA | 100 | | |
| Conductivity-imparting agent (parts by weight) | EC600JD | 10 | EC600JD | 10 | EC600JD | 10 | EC600JD | 10 | EC600JD | 10 | EC600JD | 10 |
| Imidization accelerator (molar equivalent with respect to 1 mol of amic acid) | Isoquinoline | 0.5 | Isoquinoline | 0.5 | Isoquinoline | 0.5 | Isoquinoline | 0.5 | Isoquinoline | 0.5 | Isoquinoline | 0.5 |
| | Acetic anhydride | 1.5 | Acetic anhydride | 1.5 | Acetic anhydride | 1.5 | Acetic anhydride | 1.5 | Acetic anhydride | 1.5 | Acetic anhydride | 1.5 |
| Film thickness (µm) | 12.5 | | 12.5 | | 12.5 | | 12.5 | | 12.5 | | 12.5 | |
| Volume resistivity (Ωcm) | 5.0×10¹ | | 3.5×10¹ | | 4.4×10¹ | | 1.8×10³ | | 2.2×10² | | 4.5×10³ | |
| Surface resistivity (Ω/□) | 2.0×10³ | | 1.8×10³ | | 3.0×10³ | | 1.0×10⁴ | | 6.0×10³ | | 1.3×10⁴ | |
| Mechanical properties | A | | A | | A | | B | | B | | C | |

### (Synthesis Example 1)

DMF was used as an organic solvent for polymerization; 50% by mol of BPDA and 50% by mol of 3,3',4,4'-benzophenonetetracarboxylic dianhydride (hereinafter called "BTDA") were used as the tetracarboxylic dianhydride and 85% by mol of ODA and 15% by mol of p-PDA were used as the diamine compounds; the tetracarboxylic dianhydrides and the diamine compounds were added into a reaction vessel in substantially an equimolecular amount; the mixture was polymerized with stirring; and a polyamic acid solution was consequently synthesized. Here, the synthesis was carried out so that the obtained polyamic acid solution had a solid content concentration of 15% by weight and a viscosity of 300 to 400 Pa•s (E-type viscometer manufactured by Toki Sangyo Co., Ltd.; TVE-22H) at 23°C.

Then, 10 parts by weight of the obtained polyamic acid solution, 1 part by weight of Ketjenblack (trade name: ECP600JD, manufactured by Lion Corporation), and 20 parts by weight of DMF were subjected to dispersion treatment with a ball mill to afford a carbon dispersion liquid. The dispersion was carried out using zirconia balls having a diameter of 5 mmϕ at a rotation speed of 600 rpm for 30 minutes.

Moreover, 100 parts by weight of the obtained carbon dispersion liquid and 183 parts by weight of the obtained polyamic acid solution were homogeneously mixed to afford a carbon-dispersed polyamic acid solution. The solution contained 10 parts by weight of Ketjenblack with respect to 100 parts by weight of polyamic acid.

### (Example 6)

To 100 g of the carbon-dispersed polyamic acid solution obtained in Synthesis Example 1 (containing 49.4 mmol of amic acid), an imidization accelerator containing 7.5 g (58.1 mmol) of isoquinoline, 7.5 g (73.5 mmol) of acetic anhydride, and 5 g of DMF was added, and a homogeneous coating liquid was prepared. Here, the molar equivalent of isoquinoline with respect to 1 mol of amic acid (hereinafter called "molar equivalent of isoquinoline") was 1.2, and the molar equivalent of acetic anhydride with respect to 1 mol of amic acid (hereinafter called "molar equivalent of acetic anhydride") was 1.5. The obtained coating liquid was cast on an aluminum foil so as to give a final thickness of 12.5 µm and a width of 50 cm, and the aluminum foil with the coating liquid was dried at 120°C for 108 seconds. The self-supporting film after drying was released from the aluminum foil, and then was fixed to a pin. The self-supporting film was dried at 300°C for 100 seconds, and then was continuously dried at 400°C for 32 seconds, thereby affording an electrically conductive polyimide film.

The incidence of pinholes, the volume resistivity, and the surface resistivity of the obtained electrically conductive polyimide film were determined, and the mechanical properties of the obtained film were evaluated. Table 3 shows the results.

### (Synthesis Example 2)

A carbon-dispersed polyamic acid solution was obtained in a similar manner to that in Synthesis Example 1 except that 100% by mol of BPDA was used as the tetracarboxylic dianhydride and 85% by mol of ODA and 15% by mol of p-PDA were used as the diamine compounds.

### (Example 7)

An electrically conductive polyimide film was obtained in a similar manner to that in Example 6 except that 100 g of the carbon-dispersed polyamic acid solution obtained in Synthesis Example 2 was used in place of 100 g of the carbon-dispersed polyamic acid solution obtained in Synthesis Example 1. Here, the molar equivalent of isoquinoline in the imidization accelerator was 1.3 and the molar equivalent of acetic anhydride in the imidization accelerator was 1.6. The volume resistivity, the surface resistivity, and the incidence of pinholes of the obtained electrically conductive polyimide film were determined, and the mechanical properties of the obtained film were evaluated. Table 3 shows the results.

### (Synthesis Example 3)

A carbon-dispersed polyamic acid solution was obtained in a similar manner to that in Synthesis Example 1 except that 50% by mol of BPDA and 50% by mol of BPDA were used as the tetracarboxylic dianhydrides and 100% by mol of ODA was used as the diamine compound.

### (Example 8)

An electrically conductive polyimide film was obtained in a similar manner to that in Example 6 except that 100 g of the carbon-dispersed polyamic acid solution obtained in Synthesis Example 3 was used in place of 100 g of the carbon-dispersed polyamic acid solution obtained in Synthesis Example 1. Here, the molar equivalent of isoquinoline in the imidization accelerator was 1.3 and the molar equivalent of acetic anhydride in the imidization accelerator was 1.6. The volume resistivity, the surface resistivity, and the incidence of pinholes of the obtained electrically conductive polyimide film were determined, and the mechanical properties of the obtained film were evaluated. Table 3 shows the results.

### (Synthesis Example 4)

A carbon-dispersed polyamic acid solution was obtained in a similar manner to that in Synthesis Example 1 except that 100% by mol of BTDA was used as the tetracarboxylic dianhydride and 85% by mol of ODA and 15% by mol of p-PDA were used as the diamine compounds.

### (Comparative Example 7)

An electrically conductive polyimide film was obtained in a similar manner to that in Example 6 except that 100 g of the carbon-dispersed polyamic acid solution obtained in Synthesis Example 4 was used in place of 100 g of the carbon-dispersed polyamic acid solution obtained in Synthesis Example 1. Here, the molar equivalent of isoquinoline in the imidization accelerator was 1.3 and the molar equivalent of acetic anhydride in the imidization accelerator was 1.6. The volume resistivity, the surface resistivity, and the incidence of pinholes of the obtained electrically conductive polyimide film were determined, and the mechanical properties of the obtained film were evaluated. Table 3 shows the results.

### (Synthesis Example 5)

A carbon-dispersed polyamic acid solution was obtained in a similar manner to that in Synthesis Example 1 except that 50% by mol of BPDA and 50% by mol of BTDA were used as the tetracarboxylic dianhydrides and 100% by mol of p-PDA was used as the diamine compound.

### (Comparative Example 8)

An electrically conductive polyimide film was obtained in a similar manner to that in Example 6 except that 100 g of the carbon-dispersed polyamic acid solution obtained in Synthesis Example 5 was used in place of 100 g of the carbon-dispersed polyamic acid solution obtained in Synthesis Example 1. Here, the molar equivalent of isoquinoline in the imidization accelerator was 1.1 and the molar equivalent of acetic anhydride in the imidization accelerator was 1.3. The volume resistivity, the surface resistivity, and the incidence of pinholes of the obtained electrically conductive polyimide film were determined, and the mechanical properties of the obtained film were evaluated. Table 3 shows the results.

**[Table 3]**

| □ | | | Example 6 | Example 7 | Example 8 | Comparative Example 7 | Comparative Example 8 |
|---|---|---|---|---|---|---|---|
| Polyamide material (% by mol) | Tetracarboxylic dianhydride | BPDA | 50 | 100 | 50 | - | 50 |
| | | BTDA | 50 | - | 50 | 100 | 50 |
| | Diamine compound | ODA | 85 | 85 | 100 | 85 | |
| | | p-PDA | 15 | 15 | - | 15 | 100 |
| Ketjenblack (parts by weight) | | | 10 | 10 | 10 | 10 | 10 |
| Imidization accelerator (molar equivalent with respect to 1 mol of amic acid) | | Isoquinoline | 1.2 | 1.3 | 1.3 | 1.3 | 1.1 |
| | | Acetic anhydride | 1.5 | 1.6 | 1.6 | 1.6 | 1.3 |
| Volume resistivity (Ωcm) | | | 16 | 16 | 24 | 128 | 108 |
| Surface resistivity (Ω/□) | | | 1600 | 1600 | 1800 | 13000 | 11000 |
| Incidence of pinholes (per m²) | | | 0 | 10 | 8 | 200 | 100 |
| Productivity (seconds) | | | 240 | 240 | 240 | 240 | 240 |
| Mechanical properties | | | A | A | A | B | B |

As shown in Table 3, in Comparative Examples 7 and 8 using the polyamic acid without an essential component material (BPDA or ODA) for the polyamic acid of the present invention, the electrically conductive polyimide films produced by the chemical imidization method had a high volume resistivity and a high surface resistivity, contained aggregated Ketjenblack, and had a high incidence of pinholes. It is therefore obvious that the polyamic acids synthesized in Comparative Examples 7 and 8 are not useful for the chemical imidization method.

In contrast, in Examples 6 to 8 using the polyamic acid of the present invention, the electrically conductive polyimide film was produced by the chemical imidization method but had physical properties equivalent to those of an electrically conductive polyimide film by the thermal imidization method, and the aggregation of Ketjenblack and the generation of pinholes were suppressed. In addition, the heating time was significantly reduced. It is therefore obvious that the use of the polyamic acid obtained by the production process of the present invention enables an electrically conductive polyimide film to be produced in a short period of time with excellent productivity and is useful for the chemical imidization method.

### Industrial Applicability

The electrically conductive polyimide film obtained by the production process of the present invention can be suitably used for applications such as metallic electronic materials, electrode materials in batteries, electromagnetic shielding materials, electrostatic adsorption films, antistatic agents, members in image forming apparatuses, and electronic devices.

## Claims

1. A process for production of an electrically conductive polyimide film containing a conductivity-imparting agent and a polyimide resin, the process comprising drying and imidizing a coating film including
a polyamic acid (A) obtained by reacting a tetracarboxylic dianhydride containing 3,3',4,4'-biphenyltetracarboxylic dianhydride and a diamine compound containing 4,4'-oxydianiline,
wherein the tetracarboxylic dianhydride further contains 3,3',4,4'-benzophenonetetracarboxylic dianhydride and/or the diamine compound further contains p-phenylenediamine,
a conductivity-imparting agent (B),
and an imidization accelerator (C).

2. The process for production of an electrically conductive polyimide film according to claim 1, wherein 3,3',4,4'-biphenyltetracarboxylic dianhydride is contained in an amount of 50 to 100% by mol based on the total amount of the tetracarboxylic dianhydride and/or 4,4'-oxydianiline is contained in an amount of 50 to 100% by mol based on the total amount of the diamine compound.

3. The process for production of an electrically conductive polyimide film according to claim 1, wherein 3,3',4,4'-biphenyltetracarboxylic dianhydride is contained in an amount of 10 to 100% by mol based on the total amount of the tetracarboxylic dianhydride, 3,3',4,4'-benzophenonetetracarboxylic dianhydride is contained in an amount of 0 to 90% by mol based on the total amount of the tetracarboxylic dianhydride, 4,4'-oxydianiline is contained in an amount of 50 to 100% by mol based on the total amount of the diamine compound, and p-phenylenediamine is contained in an amount of 0 to 50% by mol based on the total amount of the diamine compound.

4. The process for production according to any one of claims 1 to 3, wherein the conductivity-imparting agent (B) contains conductive carbon particles.

5. The process for production of an electrically conductive polyimide film according to any one of claims 1 to 4, wherein the conductivity-imparting agent (B) is contained in an amount of 1 to 50 parts by weight with respect to 100 parts by weight of the polyamic acid (A).

6. The process for production of an electrically conductive polyimide film according to any one of claims 1 to 5, wherein the imidization accelerator (C) contains a catalyst and a chemical dehydrating agent.

7. The process for production of an electrically conductive polyimide film according to claim 6, wherein the catalyst is used in an amount ranging from 0.1 to 4.0 molar equivalents with respect to 1 mol of amic acid in the polyamic acid (A).

8. The process for production of an electrically conductive polyimide film according to claim 6 or 7, wherein the chemical dehydrating agent is used in an amount ranging from 1.0 to 5.0 molar equivalents with respect to 1 mol of amic acid in the polyamic acid (A).

9. The process for production of an electrically conductive polyimide film according to any one of claims 1 to 8, wherein the electrically conductive polyimide film has a thickness ranging from 1 to 100 µm.

10. The process for production of an electrically conductive polyimide film according to any one of claims 1 to 9, wherein the electrically conductive polyimide film has a volume resistivity in a thickness direction ranging from 1.0 × 10⁻¹ to 1.0 × 10² Ωcm and/or a surface resistivity ranging from 1.0 × 10¹ to 1.0 × 10⁴Ω/□.

## Patentansprüche

1. Ein Verfahren zur Herstellung eines elektrisch leitenden Polyimidfilms, der ein Leitfähigkeit-vermittelndes Mittel und eine Polyimidharz enthält, wobei das Verfahren Trocknen und Imidisieren eines Beschichtungsfilms umfasst, wobei der Beschichtungsfilm Folgendes enthält
eine Polyamidsäure (A), erhalten durch Umsetzen eines Tetracarbonsäuredianhydrids, das 3,3',4,4'-Biphenyltetracarbonsäuredianhydrid enthält, und einer Diaminverbindung, die 4,4'-Oxydianilin enthält,
wobei das Tetracarbonsäuredianhydrid ferner 3,3',4,4'-Benzophenontetracarbonsäuredianhydrid enthält und/oder die Diaminverbindung ferner p-Phenylendiamin enthält,
ein Leitfähigkeit-vermittelndes Mittel (B),
und einen Imidisierungsbeschleuniger (C).

2. Das Verfahren zur Herstellung eines elektrisch leitenden Polyimidfilms gemäß Anspruch 1, wobei 3,3',4,4'-Biphenyltetracarbonsäuredianhydrid in einer Menge von 50 bis 100 Mol-%, bezogen auf die Gesamtmenge des Tetracarbonsäuredianhydrids, enthalten ist und/oder 4,4'-Oxydianilin in einer Menge von 50 bis 100 Mol-%, bezogen auf die Gesamtmenge der Diaminverbindung, enthalten ist.

3. Das Verfahren zur Herstellung eines elektrisch leitenden Polyimidfilms gemäß Anspruch 1, wobei 3,3',4,4'-Biphenyltetracarbönsäuredianhydrid in einer Menge von 10 bis 100 Mol-%, bezogen auf die Gesamtmenge des Tetracarbonsäuredianhydrids, enthalten ist, 3,3',4,4'-Benzophenontetracarbonsäuredianhydrid in einer Menge von 0 bis 90 Mol-%, bezogen auf die Gesamtmenge des Tetracarbonsäuredianhydrids, enthalten ist, 4,4'-Oxydianilin in einer Menge von 50 bis 100 Mol-%, bezogen auf die Gesamtmenge der Diaminverbindung, enthalten ist und p-Phenylendiamin in einer Menge von 0 bis 50 Mol-%, bezogen auf die Gesamtmenge der Diaminverbindung, enthalten ist.

4. Das Verfahren zur Herstellung gemäß einem der Ansprüche 1 bis 3, wobei das Leitfähigkeit-vermittelnde Mittel (B) leitfähige Kohlenstoffteilchen enthält.

5. Das Verfahren zur Herstellung eines elektrisch leitenden Polyimidfilms gemäß einem der Ansprüche 1 bis 4, wobei das Leitfähigkeit-vermittelnde Mittel (B) in einer Menge von 1 bis 50 Gewichtsteilen, bezogen auf 100 Gewichtsteile der Polyamidsäure (A), vorhanden ist.

6. Das Verfahren zur Herstellung eines elektrisch leitenden Polyimidfilms gemäß einem der Ansprüche 1 bis 5, wobei der Imidisierungsbeschleuniger (C) einen Katalysator und ein chemisches Dehydratisierungsmittel enthält.

7. Das Verfahren zur Herstellung eines elektrisch leitenden Polyimidfilms gemäß Anspruch 6, wobei der Katalysator in einer Menge verwendet wird, die im Bereich von 0,1 bis 4,0 Moläquivalenten, bezogen auf 1 Mol an Amidsäure in der Polyamidsäure (A), liegt.

8. Das Verfahren zur Herstellung eines elektrisch leitenden Polyimidfilms gemäß Anspruch 6 oder 7, wobei das chemische Dehydratisierungsmittel in einer Menge verwendet wird, die im Bereich von 1,0 bis 5,0 Moläquivalenten, bezogen auf 1 Mol an Amidsäure in der Polyamidsäure (A), liegt.

9. Das Verfahren zur Herstellung eines elektrisch leitenden Polyimidfilms gemäß einem der Ansprüche 1 bis 8, wobei der elektrisch leitende Polyimidfilm eine Dicke im Bereich von 1 bis 100 µm aufweist.

10. Das Verfahren zur Herstellung eines elektrisch leitenden Polyimidfilms gemäß einem der Ansprüche 1 bis 9, wobei der elektrisch leitende Polyimidfilm einen spezifischen Dürchgangswiderstand in einer Dickerichtung im Bereich von 1,0 × 10⁻¹ bis 1,0 × 10² Ωcm und/oder einen spezifischen Oberflächenwiderstand im Bereich von 1,0 × 10¹ bis 1,0 × 10⁴ Ω/□ aufweist.

## Revendications

1. Procédé de production d'un film de polyimide électriquement conducteur contenant un agent conférant de la conductivité et une résine de polyimide, le procédé comprenant le séchage et l'imidation d'un film de revêtement incluant un acide polyamique (A) obtenu en faisant réagir un dianhydride tétracarboxylique contenant du dianhydride 3,3',4,4'-biphényltétracarboxylique et un composé de diamine contenant du 4,4'-oxydianiline,
dans lequel le dianhydride tétracarboxylique contient en outre du dianhydride 3,3',4,4'-benzophénonetétracarboxylique et/ou le composé diamine contient en outre de la p-phénylènediamine,
un agent conférant de la conductivité (B),
et un accélérateur d'imidation (C).

2. Procédé de production d'un film de polyimide électriquement conducteur selon la revendication 1, dans lequel le dianhydride 3,3',4,4'-biphényltétracarboxylique est contenu en une quantité de 50 à 100 % en moles sur la base de la quantité totale de dianhydride tétracarboxylique et/ou la 4,4'-oxydianiline est contenue en une quantité de 50 à 100 % en moles sur la base de la quantité totale du composé de diamine.

3. Procédé de production d'un film de polyimide électriquement conducteur selon la revendication 1, dans lequel le dianhydride 3,3',4,4'-biphényltétracarboxylique est contenu en une quantité de 10 à 100 % en moles sur la base de la quantité totale de dianhydride tétracarboxylique, le dianhydride 3,3',4,4'-benzophénonetétracarboxylique est présent en une quantité de 0 à 90 % en moles sur la base de la quantité totale de dianhydride tétracarboxylique, la 4,4'-oxydianiline est présente en une quantité de 50 à 100 % en moles sur la base de la quantité totale du composé de diamine, et la p-phénylènediamine est présente en une quantité de 0 à 50 % en moles sur la base de la quantité totale du composé de diamine.

4. Procédé de production selon l'une quelconque des revendications 1 à 3, dans lequel l'agent conférant de la conductivité (B) contient des particules de carbone conductrices.

5. Procédé de production d'un film de polyimide électriquement conducteur selon l'une quelconque des revendications 1 à 4, dans lequel l'agent conférant de la conductivité (B) est contenu en une quantité de 1 à 50 parties en poids par rapport à 100 parties en poids de l'acide polyamique (A).

6. Procédé de production d'un film de polyimide électriquement conducteur selon l'une quelconque des revendications 1 à 5, dans lequel l'accélérateur d'imidation (C) contient un catalyseur et un agent déshydratant chimique.

7. Procédé de production d'un film de polyimide électriquement conducteur selon la revendication 6, dans lequel le catalyseur est utilisé en une quantité allant de 0,1 à 4,0 équivalents molaires par rapport à 1 mole d'acide amique dans l'acide polyamique (A).

8. Procédé de production d'un film de polyimide électriquement conducteur selon la revendication 6 ou 7, dans lequel l'agent déshydratant chimique est utilisé en une quantité allant de 1,0 à 5,0 équivalents molaires par rapport à 1 mole d'acide amique dans l'acide polyamique (A).

9. Procédé de production d'un film de polyimide électriquement conducteur selon l'une quelconque des revendications 1 à 8, dans lequel le film de polyimide électriquement conducteur possède une épaisseur allant de 1 à 100 µm.

10. Procédé de production d'un film de polyimide électriquement conducteur selon l'une quelconque des revendications 1 à 9, dans lequel le film de polyimide électriquement conducteur possède une résistivité volumique dans un sens de l'épaisseur allant de 1,0 x 10⁻¹ à 1,0 x 10² Ωcm et/ou une résistivité de surface allant de 1,0 x 10¹ à 1,0 x 10⁴ Ω/□.
